# EUROPEAN PATENT SPECIFICATION

(11) **EP 3 103 360 B1**
(45) Date of publication and mention of the grant of the patent: **24.01.2018**
(21) Application number: 16001121.9
(22) Date of filing: 17.05.2016
(51) Int. Cl.: A43B 13/22, A43D 8/06, B29D 35/10, A43B 13/12

(54) **METHOD FOR THE MANUFACTURE OF FOOTWEAR WITH ANTI-SLIP SOLE, AND CORRESPONDING FOOTWEAR**
VERFAHREN ZUR HERSTELLUNG VON SCHUHWERK MIT RUTSCHSICHERER SOHLE, UND ENTSPRECHENDES SCHUHWERK
PROCÉDÉ POUR LA FABRICATION D'UNE CHAUSSURE AVEC SEMELLE ANTIDÉRAPANTE, ET CHAUSSURE CORRESPONDANTE

(30) Priority: 10.06.2015 IT UB20151157
(43) Date of publication of application: 14.12.2016
(73) Proprietor: Calzaturificio Orion S.p.A., 35023 Bagnoli Di Sopra (PD) (IT)
(72) Inventor: Meneghin, Graziano, 35021 Agna (PD) (IT)
(74) Representative: Rozzi, Giuseppe

(56) References cited:
- EP-A1- 1 972 223
- WO-A1-83/00803
- US-A- 3 812 604
- US-A- 6 115 945
- US-A1- 2002 189 131
- US-A1- 2010 281 714

## Description

The present invention relates to a method for the manufacture of footwear provided with a sole with anti-slip features.

Naturally an object of the present invention is also footwear provided with a sole with anti-slip features, said footwear being made with this method.

The sector of the art whereto the present invention relates is therefore that of the production of footwear provided with soles with anti-slip tread, said footwear being intended for sports activities, for use in particular work environments (safety footwear) and for normal activities of walking.

Within this scope of the art, the expression "anti-slip tread" is understood, commonly, to refer to a tread sculpted in a particular way in order to reduce the risk of slipping on ground with features which make it particularly slippery, and/or on wet ground following rain or the thawing of snow or ice.

More particularly, whereas in the first case there is generic reference to a tread with a grip effect, in the second case there is reference, more appropriately, to a tread with anti-aquaplaning effect. When walking, or running, on wet ground, the phenomenon of aquaplaning can in fact occur, which consists in the loss of contact and, therefore, of friction between tread and ground, due to the presence of water on which the tread tends to float.

This floating, and the consequent loss of adherence of the sole on the ground, is the cause of lack of stabilisation of the step with consequent danger of falling.

To overcome these disadvantages several tread solutions have been developed in the sector with anti-slip features, and different methods of production of these treads. The majority of these methods provide for the outer surface of the tread, i.e. the surface of the tread which is in contact with the ground during walking, to be sculpted in such a way that holes are shaped thereon which increase the friction between ground and tread. Since the manufacture of the tread normally takes place by means of moulding, the manufacture of said holes also takes place at the same time as said moulding operations. More particularly the machining processes of the outer surface of the tread are obtained by means of the use of particular moulds provided with pins at the holes which are to be shaped on the tread. When the moulding of rubber is performed, the pins of the mould create holes.

The patent EP1972223 falls, for example, within this context. The patent EP1972223 describes a particular method for the moulding of a tread with anti-slip features, based on the formation of holes in the tread and on the placing of inserts of woven or nonwoven fabric in said holes. Said inserts improve the anti-slip function already performed by said holes and are inserted inside said holes during the actual operation of moulding. To this end, the method described in EP1972223 provides for the use of a mould provided with pins at the holes to be shaped on the tread and the covering, with the woven or nonwoven fabric, of the entire shaped imprint in said mould or, alternatively, of the single protuberances. In this way, during moulding, said pins create the holes in the tread and the woven or nonwoven fabric penetrates said holes, creating the aforementioned anti-slip inserts. Thus a grip effect is obtained, due to the modularity of the outer surface of the tread, that is to say due to the fact that said surface is not made up of a single material but is provided with particular areas made in materials different from the plastic material of which the rest of the surface is composed.

Methods such as that described above, however, provide explicitly for the creation of the anti-slip effect to take place at the same time as the moulding of the tread and, therefore, of the sole itself. For this reason said methods are not applicable to all the technologies of production of footwear existing today. In particular a type of technology exists known as injection on shoe upper, wherein the sole is produced directly on the shoe upper through injection or pouring of polymeric material, typically expanded polyurethane (PU). In these cases the use is provided of treads already preformed which are positioned on the shoe upper, before injection of the polyurethane. The actual injection of the PU on the shoe upper therefore gives rise to the formation of the sole comprising the preformed tread. Since the methods of the prior art of the type described in EP1972223 provided for the anti-slip soles to be created separately from the shoe upper and that they be subsequently assembled to the latter by gluing or stitching, it is clear how these methods are not applicable when the soles are made by direct injection on shoe upper.

Document US 2002/0189131 A1 discloses a method for the manufacture of footwear provided with a breathable sole. Document US 3,812,604 A discloses a method of assembling an outsole to a shoe upper by injecting polymeric material between the upper and the outsole.

A first object of the present invention is therefore that of providing a method for the production of footwear with anti-slip soles, said soles being made by direct injection on shoe upper.

A further disadvantage of the methods of the prior art moreover relates to the possibility of making tread and, therefore, soles, with anti-aquaplaning features. The anti-aquaplaning effect is commonly obtained by forming on the outer surface of the tread particular undulated slits whose shape is studied especially in order to cause the outflow, by compressing it, of the excess water found between the tread and the ground. These slits cannot be formed during moulding as, instead, takes place in the case of holes formed with the method of the patent EP1972223, but are normally obtained by means of sculpting of the tread already completed. For this reason said slits are difficult to obtain, if not completely impossible, on a tread having small thickness and small consistency and, in particular, on footwear already completed after the phase of direct injection on shoe upper.

A second, but not in order of importance, object of the present invention is therefore that of providing a method for the production of footwear with anti-slip soles, and in particular with features of anti-aquaplaning, using preformed treads even with small thickness and small consistency.

These objects are achieved by means of the method of the present invention, said method comprising the steps of:
- positioning of a punch on a preformed tread. Henceforth the surface of the tread, which is intended to be in contact with the ground, will be referred to as "outer surface" while the surface of the tread, which is not intended to be in contact with the ground will be referred to as "inner surface". Said punch is shaped so as to have the same pattern as the outer surface of the tread already preformed and said punch is provided with protuberances for the sculpting of holes and/or of anti-aquaplaning slits in said tread. The positioning of the punch on the inner surface of the tread takes place in such a way that the shaping of the punch corresponds to the pattern of the preformed tread;
- punching of the tread with said punch. Since said protuberances are provided with a sharp profile and said punch is made up of a material able to perforate and/or cut the material whereof the tread is made up, during said punching both the inner surface and the outer surface of the tread are sculpted with undulated slits and/or holes at said protuberances of said punch.
- positioning of the tread on a specific sole support mould at a last whereon a shoe upper is positioned, said tread being sculpted with holes and/or slits during said punching step;
- injection of polymeric material, preferably expanded polyurethane (PU), between the shoe upper and the tread, said injection being apt to form a sole which incorporates the tread. During said injection, the holes sculpted in the tread by means of said punching are filled by said polymeric material, preferably expanded PU. The optional undulated slits, instead, in order to be able to perform adequately their function of anti-aquaplaning, are not filled by the polymeric material used for the injection. This is made possible by the small dimensions of said slits, which do not allow the passage of the polymeric material injected. In this way a sole is obtained which has an anti-aquaplaning effect and, at the same time, a grip effect. The anti-aquaplaning effect is obtained thanks to the presence of said slits, while the grip effect is obtained thanks to the modularity of the outer surface of the sole. The latter in fact will be formed by areas of a first material, said first material being that whereof the preformed tread is originally made up, and areas of a second material, said second material being injected during the formation of the sole directly on the shoe upper. In order to guarantee the grip of the sole on the ground, said second material is characterised in that it has a lower density compared to that of said first material. Said first material is preferably vulcanised rubber or compact polyurethane or thermoplastic polyurethane or any other polymeric material with density greater than 1kg/dm³ and said second material is expanded polyurethane or any other polymeric material with density less than 1 kg/dm³.

The invention also relates to footwear provided with a nonslip sole made according to the method claimed in claim 1 or one of the dependent claims.

These and further features of the present invention will be made clearer by the reading of the following detailed description, relating to some preferred embodiments of the present invention, to be considered as a non-limiting example of the more general concepts claimed.

In the following description reference is made to the accompanying drawings in which:
- Figure 1 is a representation of the outer surface of a preformed tread before the application of the method of the present invention;
- Figure 2a is a three-dimensional view of the punch used in a first embodiment of the method of the present invention;
- Figure 2b is a three-dimensional view of the assembly made up of the punch used in a first embodiment of the method of the present invention and the preformed tread whereon said punch has to be positioned for the performance of the method according to a first embodiment of the present invention.
- Figure 2c is a representation of the outer surface of the tread at the end of the method of the present invention, relating to a first embodiment of said method;
- Figure 3a is a three-dimensional view of the punch used in a second embodiment of the method of the present invention;
- Figure 3b is a three-dimensional view of the assembly made up of the punch used in a second embodiment of the method of the present invention and the preformed tread whereon said punch has to be positioned for the performance of the method according to a second embodiment of the present invention.
- Figure 3c is a representation of the outer surface of the tread at the end of the method of the present invention, relating to a second embodiment of said method;

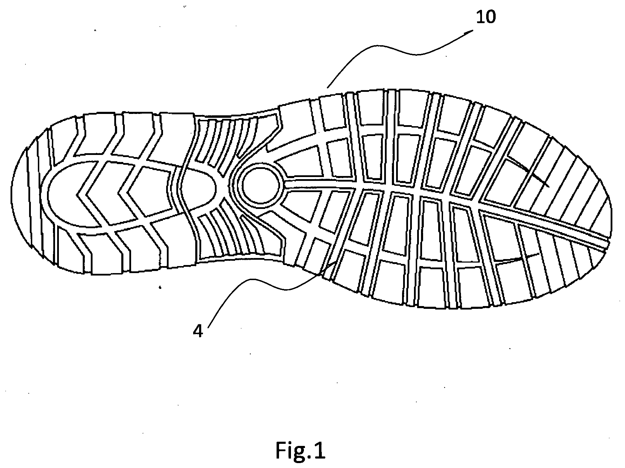

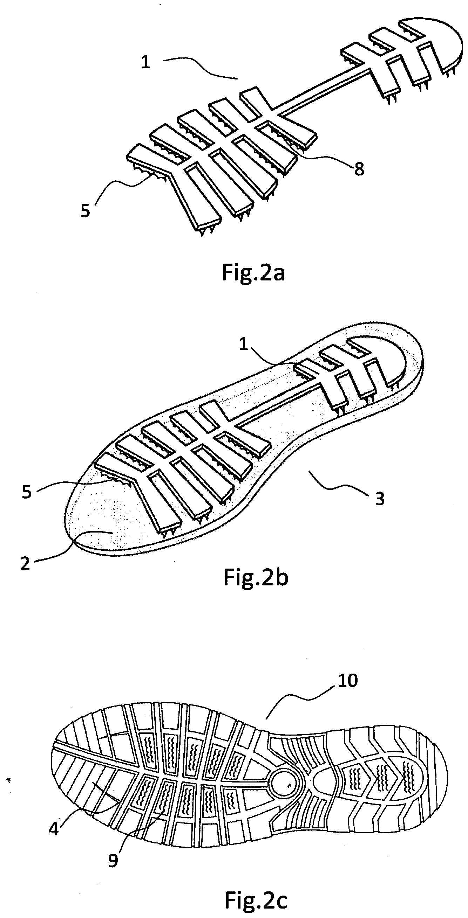

Referring to Figures 1, 2a, 2b and 2c, in a first embodiment of the present invention, the method of the present invention comprises the following steps:
- positioning of a punch (1) on the inner surface (2) of a preformed tread (3). Said tread (3) is preferably made up of polymeric material, said polymeric material being vulcanised rubber. The outer surface (10) of said tread (3) can be, moreover, sculpted with incisions (4) with the most widely varying geometry and shapes.
   Said punch (1) is shaped in such a way as to follow the geometry and the dimensions of the incisions (4) present on the outer surface (10) of said tread (3). Said punch (1) is provided with a plurality of protuberances (5) having a sharp and undulated profile (8), that is to say a profile (8) capable of creating in said tread (3) undulated slits (9). The positioning of the punch (1) on the inner surface (2) of the tread (3) takes place in such a way that the shaping of the punch (1) corresponds to the incisions (4) of the outer surface (10) of the tread (3);
- punching of the tread (3) with said punch (1). During said step of punching a pressure is applied on the punch (1), said punch (1) being previously positioned on the inner surface (2) of the tread (3). Because of the aforesaid application of pressure, the protuberances (5) penetrate the tread (3), said protuberances (5) being provided with a sharp profile apt to perforate said tread (3). More particularly the method of the present invention provides that a pressure be applied of such intensity as to make said protuberances (5) penetrate the tread (3) throughout its thickness. For this purpose said protuberances (5) are dimensioned in such a way as to succeed in penetrating completely the tread (3) until perforating the outer surface (10) thereof. The result of the step of punching will therefore be a tread (3) whose inner surface (2) and whose outer surface (10) are provided with undulated slits (9), said undulated slits (9) traversing said tread (3) throughout its thickness. The dimensions of the undulated slits (9) created by said protuberances (5) are such as not to allow the polymeric material which is to be injected during the subsequent step of injection to traverse them;
- positioning of the tread (3) punched during the preceding step on a specific sole support mould at a last whereon a shoe upper is positioned;
- injection of polymeric material, between the shoe upper and the tread (3), said injection being apt to form a sole which incorporates the tread (3). Since the undulated slits (9) created by said protuberances (5) have such dimensions as not to allow their traversing by said material, at the end of the injection step said undulated slits (9) remain empty. Thanks to this, said undulated slits (9) are able to perform an anti-aquaplaning function, that is to say they are able to cause the outflow, by compressing it, of the excess water which is found between the tread (3) and the ground. At the end of the step of injection a sole is therefore obtained with an outer surface (10) provided with empty undulated slits (9).

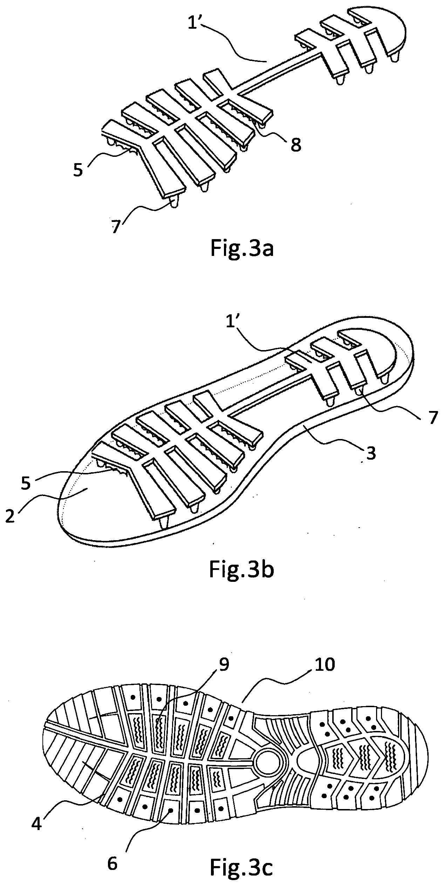

Referring to Figures 1, 3a, 3b and 3c, in a second embodiment of the present invention, the method of the present invention comprises the following steps:
- positioning of a punch (1') on the inner surface (2) of a preformed tread (3). Said tread (3) is preferably made up of a first polymeric material, said polymeric material being vulcanised rubber or in any case a material of density greater than 1 kg/dm³. The outer surface (10) of said tread (3) can be, moreover, sculpted with incisions (4) with the most widely varying geometry and shapes.
   Said punch (1') is shaped in such a way as to follow the geometry and the dimensions of the incisions (4) present on the outer surface (10) of said tread (3). Said punch (1') is moreover provided with a first plurality of protuberances (5) having a sharp undulated profile (8), that is to say a profile (8) capable of creating in said tread (3) undulated slits (9). Unlike the first embodiment, in the second embodiment of the present invention said punch (1') is also provided with a second plurality of protuberances (7), having a pseudocylindrical shape and likewise having a sharp profile, that is to say a profile capable of perforating the tread (3).
   The positioning of said punch (1') on the inner surface (2) of the tread (3) takes place in such a way that the shaping of the punch (1') corresponds to the incisions (4) of the outer surface (10) of the tread (3);
- punching of the tread (3) with said punch (1'). During said step of punching, a pressure is applied on the punch (1'), previously positioned on the inner surface (2) of the tread (3). Following the aforementioned application of pressure, said first plurality of protuberances (7) and said second plurality of protuberances (7) penetrate the tread (3), said protuberances (5) of said first plurality of protuberances (5) and said protuberances (7) of said second plurality of protuberances (7) being provided with a sharp profile apt to perforate said tread (3). More particularly the process of the present invention provides that a pressure be applied of such intensity as to make said first plurality of protuberances (5) and said second plurality of protuberances (7) penetrate the tread (3) throughout its thickness. For this purpose said protuberances (5) of said first plurality of protuberances and said protuberances (7) of said second plurality of protuberances are dimensioned in such a way as to succeed in penetrating completely the tread (3) until perforating the outer surface (10) thereof. The result of the step of punching will therefore be a tread (3) whose inner surface (2) and whose outer surface (10) are provided with holes (6) and with undulated slits (9), said holes (6) and said undulated slits (9) traversing-said tread (3) throughout its thickness. The dimensions of the undulated slits (9) created by said first plurality of protuberances (5), unlike the holes (6) created by said second plurality of protuberances (7), are such as not to allow the polymeric material to be injected during the subsequent step of injection to traverse them;
- positioning of the tread (3) punched during the preceding step on a specific sole support mould at a last whereon a shoe upper is positioned;
- injection of a second polymeric material, between the shoe upper and the tread (3), said injection being apt to form a sole which incorporates the tread (3). Said second polymeric material is a material of lower density than that of the material of which the preformed tread (3) is made up. Said second polymeric material is, preferably, expanded polyurethane or in any case a polymeric material with density lower than 1 kg/dm³. During the step of injection, the holes (6) previously sculpted in the tread (3) in the step of punching are filled by said second polymeric material. Since the undulated slits (9) created by said first plurality of protuberances (5) have such dimensions as not to allow their traversing by said second material, at the end of the injection step said undulated slits (9) remain empty. Thanks to this, said undulated slits (9) are able to perform an anti-aquaplaning function, that is to say they are able to cause the outflow, by compressing it, of the excess water which is found between the tread (3) and the ground. At the end of the step of injection a sole is therefore obtained with an outer surface (10) which has the following two features:
   (i) it is a modular surface, that is to say it is formed by zones or areas of said first polymeric material, and zones or areas of said second polymeric material, said second material being of lower density than that of said first polymeric material;
   (ii) it is a surface provided with empty undulated slits.

The modularity of the outer sole ensures the grip of said sole on the ground, reducing the risk of slipping on slippery ground. The empty undulated slits instead ensure the effect of anti-aquaplaning.

The invention described above achieves the objects set, overcoming the disadvantages suffered in the prior art. The method of the present invention allows in fact the obtaining of an anti-slip effect, also on soles made by means of direct injection on shoe upper, said effect being obtained not in the phase of moulding of the treads but by machining operations performed on preformed treads.

## Claims

1. Method for the manufacture of footwear provided with antislip sole, **characterised in that** it comprises the steps of:
- positioning of cutting means (1, 1') on the inner surface (2) of a tread (3);
- cutting of said tread (3) with said cutting means (1, 1') in such a way as to create undulated slits (9) in said tread (3), said undulated slits (9) having such dimensions as to traverse said tread (3) throughout its thickness;
- positioning of said tread (3) on a special sole support mould at a last whereon a shoe upper is positioned, said tread (3) being provided with said undulated slits (9) created previously by said cutting means (1, 1');
- injecting, between said shoe upper and said tread (3), of polymeric material, in such a way as to form a sole which incorporates said tread (3), said undulated slits (9) having such dimensions as to not allow said polymeric material to traverse said undulated slits (9).

2. Method according to claim 1, wherein said step of cutting said tread (3) with said cutting means (1, 1') provides for holes (6) to be created in said tread (3), said holes (6) having such dimensions as to traverse said tread (3) throughout its thickness.;

3. Method according to claim 1 or 2, wherein said cutting means (1, 1') are constituted by a punch (1) provided with a plurality of protuberances (5) having a cutting profile, said plurality of protuberances (5) being suitable for creating said undulated slits (9) in said tread (3).

4. Method according to claim 2, wherein said cutting means (1, 1') are constituted by a punch (1') provided with a first plurality of protuberances (5) having a cutting profile, said first plurality of protuberances (5) being apt to create said undulated slits (9) in said tread (3) and a second plurality of protuberances (7), said second plurality of protuberances (7) being apt to create said holes (6) in said tread (3).

5. Method according to claim 2 or 4, wherein said tread (3) is constituted by a first polymeric material and wherein said step of injecting polymeric material between said shoe upper and said tread (3) provides that a second polymeric material of density lower than the density of said first polymeric material is injected, in such a way as to fill said holes (6) of said tread (3) with said second polymeric material.

6. Method according to claim 4 or according to claims 4 and 5, wherein the protuberances of said second plurality of protuberances (7) are pseudocylindrical in shape.

7. Method according to one of the preceding claims, wherein said step of positioning of the cutting means (1, 1') on the inner surface (2) of a tread (3) takes place on a tread (3) whose outer surface (10) has been previously sculpted with incisions (4).

8. Method according to claims 3 and 7 or according to claims 4 and 7 or according to claims 4, 5 and 7 or according to claims 6 and 7, wherein said punch (1, 1') is shaped in such a way as to follow the geometry of said incisions (4), said punch (1, 1') being apt to be positioned in such a way that the shape of said punch (1, 1') corresponds to said incisions (4) in said step of positioning of said cutting means (1, 1') on the inner surface (2) of said tread (3).

9. Method according to claim 5 or claim 5 and any one of claims 6 to 8, wherein said first polymeric material is vulcanised rubber or compact polyurethane or thermoplastic polyurethane.

10. Method according to claim 5 or claim 5 and one of claims 6 to 8, wherein said first polymeric material has a density greater than 1 kg/dm³.

11. Method according to claim 5 or claim 5 and one of claims 6 to 10, wherein said second polymeric material is polyurethane foam.

12. Method according to claim 5 or claim 5 and one of claims 6 to 10, wherein said second polymeric material has a density lower than 1 kg/dm³.

13. Footwear provided with nonslip sole made according to the method described in one or more of the preceding claims.

## Patentansprüche

1. Verfahren zur Herstellung von Schuhwerk mit Antirutschsohle, das sich durch folgende Schritte auszeichnet:
- Positionierung des Schneidwerkzeugs (1, 1') an der innen liegenden Oberfläche (2) eines Sohlenprofils (3);
- Schneiden des besagten Sohlenprofils (3) mit besagtem Schneidwerkzeug (1, 1') derart, dass in besagtem Sohlenprofil (3) wellenförmige Rillen (9) entstehen, wobei besagte wellenförmige Rillen (9) Abmaße haben, die über die gesamte Dicke besagten Sohlenprofils (3) reichen;
- Positionierung besagten Sohlenprofils (3) auf einer speziellen Sohlenhalterungsform auf einem Leisten, auf dem das Schuhobermaterial positioniert ist, wobei besagtes Sohlenprofils (3) zuvor mit besagten wellenförmigen Rillen (9) durch besagtes Schneidwerkzeug (1, 1 ') versehen wurde;
- zwischen dem Schuhobermaterial und dem besagten Sohlenprofil (3) Einspritzen Polymermaterial, so dass eine Sohle entsteht, die das besagte Sohlenprofil (3) miteinschließt, wobei die besagten wellenförmigen Rillen (9) solche Abmaße haben, dass sie es dem Polymermaterial nicht ermöglichten, besagte wellenförmige Rillen (9) zu durchlaufen.

2. Verfahren nach Anspruch 1, wobei der besagte Schritt des Schneidens besagten Sohlenprofils (3) mit besagtem Schneidwerkzeug (1, 1') die Entstehung von Löchern (6) in besagtem Sohlenprofil (3) ermöglicht, wobei besagte Löcher (6) Abmaße halben, die über die gesamte Dicke besagten Sohlenprofils (3) reichen;

3. Verfahren nach Anspruch 1 oder 2 wobei besagtes Schneidwerkzeug (1, 1') aus einem Stanzer (1) besteht, mit einer Vielzahl von Ausstülpungen (5) mit einem Schneidprofil, besagte Vielzahl von Ausstülpungen (5), die in der Lage sind, die besagten wellenförmigen Rillen (9) in besagtem Sohlenprofil (3) zu generieren.

4. Verfahren nach Anspruch 2 wobei besagtes Schneidwerkzeug (1, 1') aus einem Stanzer (1') besteht, mit einer ersten Vielzahl von Ausstülpungen (5) mit einem Schneidprofil, die in der Lage sind, die besagten wellenförmigen Rillen (9) in besagtem Sohlenprofil (3) zu generieren und einer zweiten Vielzahl von Ausstülpungen (7), die in der Lage sind, die besagten Löcher (6) in besagtem Sohlenprofil (3) zu generieren.

5. Verfahren nach Anspruch 2 oder 4 wobei besagtes Sohlenprofil (3) aus einem ersten Polymermaterial besteht und bei dem der besagte Schritt des Einspritzens des Polymermaterials zwischen besagtem Schuhobermaterial und besagtem Sohlenprofil (3) ermöglicht, dass ein zweites Polymermaterial mit einer niedrigeren Dichte als das besagte erste Polymermaterial derart eingespritzt wird, dass die besagten Löcher (6) des besagten Sohlenprofils (3) mit dem besagten zweiten Polymermaterial gefüllt werden.

6. Verfahren nach Anspruch 4 oder nach Anspruch 4 und 5 wobei die Ausstülpungen der besagten zweiten Vielzahl von Ausstülpungen (7) von pseudozylindrischer Form sind.

7. Verfahren nach einem der vorangegangenen Ansprüche, wobei besagter Schritt der Positionierung des Schneidwerkzeugs (1, 1') an der innen liegenden Oberfläche (2) eines Sohlenprofils (3) an einem Sohlenprofil (3) stattfindet, dessen außenliegend Oberfläche (10) zuvor mit Einschnitten (4) versehen wurde.

8. Verfahren nach Ansprüchen 3 und 7 oder nach Ansprüchen 4 und 7 oder nach Ansprüchen 4, 5 und 7 oder nach Ansprüchen 6 und 7, wobei besagter Stanzer (1, 1') derart geformt ist, dass er der Geometrie von besagten Einschnitten (4) folgt, besagter Stanzer (1, 1') dazu geeignet ist, derart positioniert zu werden, dass seine Form besagten Einschnitten (4) in dem besagten Schritt des Positionierens des besagten Schneidwerkzeugs (1, 1') an der innen liegenden Oberfläche (2) besagten Sohlenprofils (3) entspricht.

9. Verfahren nach Anspruch 5 oder Anspruch 5 und irgendeinem anderen der Ansprüche 6 bis 8, wobei besagtes erstes Polymermaterial vulkanisierter Gummi oder kompaktes Polyurethan oder thermoplastisches Polyurethan ist.

10. Verfahren nach Anspruch 5 oder Anspruch 5 und einem anderen der Ansprüche 6 bis 8, wobei besagtes erstes Polymermaterial eine größere Dichte als 1 kg/dm³ hat.

11. Verfahren nach Anspruch 5 oder Anspruch 5 und einem anderen der Ansprüche 6 bis 10, wobei besagtes zweites Polymermaterial Polyurethanschaum ist.

12. Verfahren nach Anspruch 5 oder Anspruch 5 und einem anderen der Ansprüche 6-10, wobei besagtes zweites Polymermaterial eine niedrigere Dichte als 1 kg/dm3 hat.

13. Schuhwerk mit einer Antirutschsohle, die nach dem Verfahren hergestellt wurde, das in einem oder mehreren der vorigen Ansprüche beschrieben wurde.

## Revendications

1. Procédé de fabrication de chaussures à semelles antidérapantes, **caractérisé par** les étapes suivantes :
- positionnement d'outils de découpe (1, 1') sur la surface interne (2) d'une semelle d'usure (3) ;
- découpe de ladite semelle d'usure (3) à l'aide desdits outils de découpe (1, 1') de façon à créer des fentes ondulées (9) dans ladite semelle d'usure (3), lesdites fentes ondulées (9) étant dimensionnées de façon à traverser ladite semelle d'usure (3) sur toute son épaisseur ;
positionnement de ladite semelle d'usure (3) sur une forme de support de semelle spéciale sur laquelle une tige est positionnée, ladite semelle d'usure (3) possédant lesdites fentes ondulées (9) préalablement créées à l'aide desdits outils de découpe (1, 1');
- injection, entre ladite tige et ladite semelle d'usure (3), d'un matériau polymère, de façon à former une semelle intégrant ladite semelle d'usure (3), lesdites fentes ondulées (9) étant dimensionnées de façon à empêcher que ledit matériau polymère ne traverse lesdites fentes ondulées (9).

2. Procédé conforme à la revendication de brevet 1, dans le cadre duquel ladite étape de découpe de ladite semelle d'usure (3) à l'aide desdits outils de découpe (1, 1') permet de créer des trous (6) dans ladite semelle d'usure (3), lesdits trous (6) étant dimensionnés de façon à traverser ladite semelle d'usure (3) sur toute son épaisseur ;

3. Procédé conforme à la revendication de brevet 1 ou 2, dans le cadre duquel lesdits outils de découpe (1, 1') sont constitués d'un poinçon (1) possédant une pluralité de protubérances (5)
qui présentent un profil de découpe, ladite pluralité de protubérances (5) étant adaptée à la création desdites fentes ondulées (9) dans ladite semelle d'usure (3).

4. Procédé conforme à la revendication de brevet 2, dans le cadre duquel lesdits outils de découpe (1, 1') sont constitués d'un poinçon (1') possédant une première pluralité de protubérances (5) qui présentent un profil de découpe, ladite première pluralité de protubérances (5) étant adaptée à la création desdites fentes ondulées (9) dans ladite semelle d'usure (3), ainsi qu'une seconde pluralité de protubérances (7), ladite seconde pluralité de protubérances (7) étant adaptée à la création desdits trous (6) dans ladite semelle d'usure (3).

5. Procédé conforme à la revendication de brevet 2 ou 4, dans le cadre duquel ladite semelle d'usure (3) est constituée d'un premier matériau polymère et dans le cadre duquel ladite étape d'injection de matériau polymère entre ladite tige et ladite semelle d'usure (3) permet d'injecter un second matériau polymère de densité inférieure à celle dudit premier matériau polymère, de façon à remplir lesdits trous (6) de ladite semelle d'usure (3) avec ledit second matériau polymère.

6. Procédé conforme à la revendication de brevet 4 ou aux revendications de brevets 4 et 5, dans le cadre duquel les protubérances de ladite seconde pluralité de protubérances (7) sont de forme pseudo-cylindrique.

7. Procédé conforme à l'une des revendications de brevets précédentes, dans le cadre duquel ladite étape de positionnement desdits outils de découpe (1, 1') sur la surface interne (2) d'une semelle d'usure (3) s'effectue sur une semelle d'usure (3) dont la surface externe (10) a préalablement été sculptée de façon à y pratiquer des incisions (4).

8. Procédé conforme aux revendications de brevets 3 et 7, aux revendications de brevets 4 et 7, aux revendications de brevets 4, 5 et 7 ou aux revendications de brevets 6 et 7, dans le cadre duquel ledit poinçon (1, 1') est façonné de façon à suivre la géométrie desdites incisions (4), ledit pinçon (1, 1') pouvant être positionné de façon à ce que la forme dudit poinçon (1, 1') corresponde auxdites incisions (4) au moment de ladite étape de positionnement dudit outil de découpe (1, 1') sur la surface interne (2) de ladite semelle d'usure (3).

9. Procédé conforme à la revendication de brevet 5 ou à la revendication de brevet 5 et à l'une des revendications de brevets 6 à 8, dans le cadre duquel ledit premier matériau polymère est du caoutchouc vulcanisé ou du polyuréthane compact ou du polyuréthane thermoplastique.

10. Procédé conforme à la revendication de brevet 5 ou à la revendication de brevet 5 et à l'une des revendications de brevets 6 à 8, dans le cadre duquel ledit premier matériau polymère possède une densité supérieure à 1 kg/dm³.

11. Procédé conforme à la revendication de brevet 5 ou à la revendication de brevet 5 et à l'une des revendications de brevets 6 à 10, dans le cadre duquel ledit second matériau polymère est de la mousse de polyuréthane.

12. Procédé conforme à la revendication de brevet 5 ou à la revendication de brevet 5 et à l'une des revendications de brevets 6 à 10, dans le cadre duquel ledit second matériau polymère possède une densité supérieure à 1 kg/dm³.

13. Chaussures à semelles antidérapantes fabriquées conformément au procédé décrit dans une ou plusieurs des revendications de brevets précédentes.
